**Europäisches Patentamt**

**European Patent Office**

**Office européen des brevets**

(19)

(11) Publication number: **0 229 840**
**A1**

## (12) EUROPEAN PATENT APPLICATION

published in accordance with Art. 158(3) EPC

(21) Application number: **86903551.9**

(51) Int. Cl.⁴: **G 01 N 29/04**

(22) Date of filing: **14.05.86**

Data of the international appli-
cation taken as a basis:

(86) International application number:
**PCT/JP 86/00248**

(87) International publication number:
**WO 86/06838 (20.11.86 86/25)**

(30) Priority: **15.05.85 JP 103075/85**

(43) Date of publication of application: **29.07.87**
**Bulletin 87/31**

(84) Designated Contracting States: **DE GB**

(71) Applicant: **YOKOGAWA MEDICAL SYSTEMS, LTD, 1-3,**
**Sakaecho 6-chome Tachikawa-shi, Tokyo 190 (JP)**

(72) Inventor: **KAKIZAWA, Tsuyoshi, Yokogawa Medical**
**Systems, Ltd. 1-3, Sakaecho, 6-chome Tachikawa-shi**
**Tokyo 190 (JP)**
Inventor: **SANO, Shinichi, Yokogawa Medical Systems,**
**Ltd. 1-3, Sakaecho, 6-chome Tachikawa-shi**
**Tokyo 190 (JP)**

(74) Representative: **Henkel, Feiler, Hänzel & Partner,**
**Möhlstrasse 37, D-8000 München 80 (DE)**

(54) **ULTRASONIC FLAW DETECTOR.**

(57) An ultrasonic flaw detector in which high-frequency components of received signals of echo from a short distance are not lost even when the focal point of echo reception is continuously changed from a short distance to a long distance, and in which the weight of a signal detected by a vibration element at the center of an aperture remains maximum at all times irrespective of change in the distance of the focal point. Here, a delay circuit (8) which adjusts the focal point in the echo reception is made up of a series circuit which consists if a fixed delay circuit (9) which has a maximum delay time at the center of the aperture and which has a delay time distribution that substantially decreases from the center toward both ends thereof in proportion to the second power of the distance from the center of the aperture, and a variable delay circuit (10) which has a minimum delay time at the center of the aperture and which has a delay time distribution that substantially increases from the center toward both ends thereof in proportion to the second power of the distance from the center of the aperture.

# Description

## ULTRASONIC DIAGNOSTIC APPARATUS

### Technical Field

The present invention relates to an ultrasonic diagnostic apparatus which receives an ultrasonic echo while continuously varying the focus of ultrasonic echo reception.

### Background Art

When an ultrasonic echo is received by using an ultrasonic vibrator array which has a plurality of vibrator elements on a one-dimensional line or in a two-dimensional plane in order to effect echo reception from the desired focal length, all the echo signals detected by the respective vibrator elements of the vibrator array are summed up by delaying them by the respective delay times which are determined in correspondence with the respective focal lengths, thereby obtaining a synthetic echo reception signal.

If the direction of an ultrasonic beam is perpendicular to the ultrasonic vibrator array, with respect to the delay times of a plurality of the vibrator elements which are related to the echo reception of one beam, namely, the delay times of the respective vibrator elements in the aperture of the vibrator array, the delay time of the vibrator element at the center of the aperture takes the maximum value, and the delay time of each of the vibrator elements on both sides of the central vibrator element decreases in proportion to approximately the square of the distance from the center of the aperture. In the aperture of the vibrator array, the shorter the focal length is, the larger the difference in delay time between the element at the center and the elements at both ends, and the longer the focal length is, the smaller is the difference. Since the echo of the nearest distance first return to the ultrasonic vibrator array and the other echoes successively return in the order of the nearest distance, the focus of the echo reception is gradually varied in correspondence with the focal length from a short distance to a long distance by gradually varying the delay time for each vibrator element from the delay time for a short distance to a delay time for a long distance.

When it is necessary to continuously vary the focal length, a variable delay circuit which is capable of continuously varying a delay time is used. As the variable delay circuit are used a plurality of constant-K filters each of which is composed of an inductor having a fixed inductance L and a capacitor having a variable capacitance C and which are connected to each other in series. In each filter, the delay time $\tau = \sqrt{LC}$ in the range in which the frequency f of a signal which passes the filter is adequately lower than the high-pass cut-off frequency of this filter $f_c = 1/2\pi\sqrt{LC}$.

When the reception is focalized on an echo from a short distance by such a variable delay circuit, the capacitance C of the variable capacitance is increased to form a large delay time , while when the reception is focalized on an echo from a long distance, the capacitance C of the variable capacitance is decreased to form a small delay time $\tau$. If the capacitance C of the variable capacitor is increased to increase the delay time $\tau$, the reduction in the high-pass cut-off frequency $f_c$ is unavoidable.

A variable capacity diode is used as the variable capacitor. However, in an available variable capacity diode which has an adequate capacity variable ratio, the absolute value of the capacitance C is comparatively large.
Therefore, when the capacitance C of the variable diode is
increased to increase the delay time $\tau$ for making the focal
distance short, the high-pass cut-off frequency $f_c$ of the
filter is so greatly reduced as to cut off or greatly
attenuate the high-pass frequency components of the echo
signal. Since a high-pass frequency component in a receive
signal for an echo from a short distance is an important
signal for representing a minute structure of an object to
be examined, it is very inconvenient that such a component
is cut off or greatly attenuated in the delay circuit. In
addition, when a dynamic filter in which the frequency pass
band gradually moves from a high-pass band to a low-pass
band with the elapse of the receiving time is used in order
to effect the optimum filtering of a reception signal in
accordance with the change in frequency component of the
echo signal which depends on the distance of the echo
source, the frequency components in the low-pass band of the
reception signal of the short-distance echo at the initial
stage of reception are cut off or greatly attenuated by the
dynamic filter in which the pass band is then a high-pass
band. As a result, in combination with the cut-off or
attenuation of the high-pass frequency components in the
delay circuit, the frequency components both in the
high-pass and low-pass bands are damaged, so that the gain
of the reception signal is greatly reduced.

Since the signal of the vibrator element at a portion
nearer to the central portion of the aperture passes the
longer delay circuit for providing a longer delay time, the
nearer to the central portion of the aperture a vibrator
element is, the larger is the amount of attenuation of the
signal, so that the importance of the signal at the central
portion of the aperture which has the most significant in the signal synthesis by summing up signals is inconveniently
reduced most. Furthermore, the importance of the signal at
the central portion of the aperture varies in correspondence
with the focal length.

## Disclosure of the Invention

Accordingly, it is an object of the present invention
to provide an ultrasonic diagnostic apparatus which is
capable of continuously varying the focus of echo reception
from a short distance to a long distance without damaging
a high-pass frequency component of a reception signal of an
echo from a short distance, and in which the importance of a
signal detected by a vibrator element at the central portion
of an aperture is constantly at its maximum irrespective of
the change in the focal length.

An ultrasonic diagnostic apparatus according to the
present invention is characterized in that a delay circuit
(8) for controlling the focus of echo reception comprises a
series circuit composed of a fixed delay circuit (9) which
distributes the delay time so that the delay time is at its
maximum at the central portion of the aperture and decreases
from the central portion toward both end portions
substantially in proportion to the square of the distance
from the center of the aperture, and a variable delay
circuit (10) distributes the delay time such that the delay
time is at its minimum at the central portion of the
aperture and increases from the central portion toward both
end portions substantially in proportion to the square of
the distance from the center of the aperture.

## Brief Description of the Drawings

Fig. 1 is a block diagram of an echo reception system of an embodiment of an ultrasonic diagnostic apparatus in accordance with the present invention;

Fig. 2 is an example of a variable delay circuit 10 in the apparatus shown in Fig. 1;

Figs. 3 and 4 are delay characteristic curves of a delay circuit 8 in the apparatus shown in Fig. 1;

Fig. 5 is a frequency characteristic curve of the delay circuit 8 of the apparatus shown in Fig. 1; and

Fig. 6 is a frequency characteristic curve of a dynamic filter 5 of the the apparatus shown in Fig. 1.

Best Mode for Carrying Out the Invention

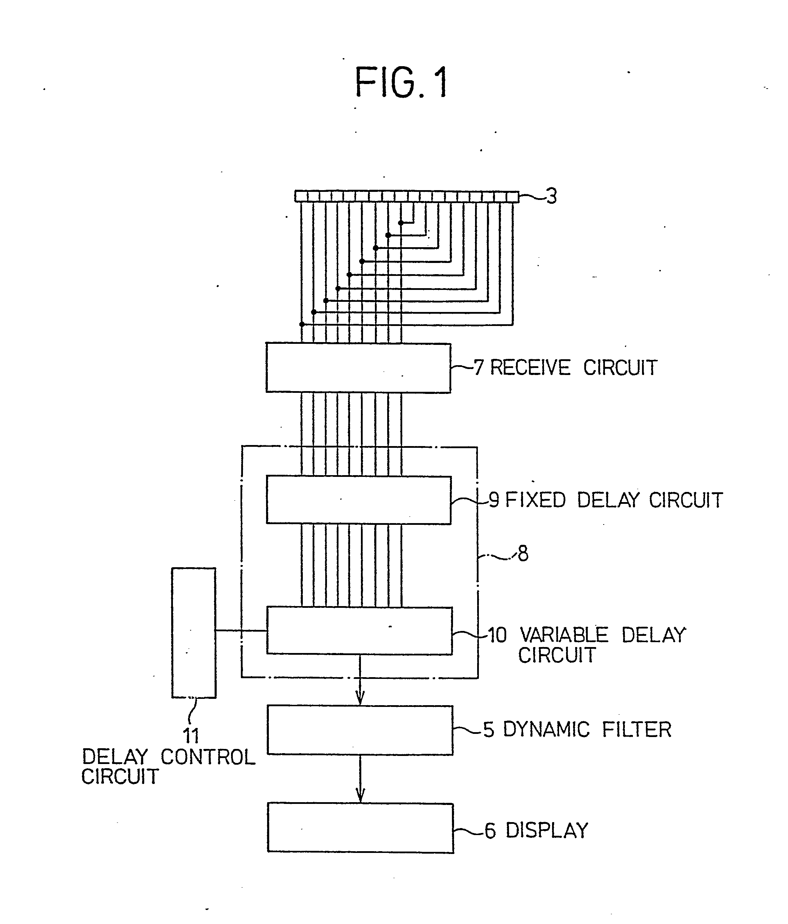

Fig. 1 is a block diagram of an echo reception system of an embodiment of an ultrasonic apparatus in accordance with the present invention. In Fig. 1, a plurality of vibrator elements 3 constitute the aperture for echo reception in a vibrator array. Signal lines are led from the respective vibrator elements 3, and each pair of signal lines which are symmetric with respect to the center of an aperture is connected with each other in common, and connected in turn to a receive circuit 7. The receive circuit 7 has reception amplifiers (not shown) corresponding to the respective signal lines, and the output signal line output from each amplifier is connected to a delay circuit 8. The delay circuit 8 is composed of a fixed delay circuit 9 and a variable delay circuit 10 which are connected to each other in series. The variable delay circuit 10 is controlled by a delay control circuit 11. The delay circuit 8 will later be explained in detail. Each signal of the plurality of output signal lines of the receive circuit 7 which are connected to the delay circuit 8 is subjected to delay and addition processing which will later be described in detail in the delay circuit 8, and forms an echo reception signal. The thus-formed echo reception signal is filtered through a dynamic filter 5 and is supplied to a display 6, which displays it as an image of a B mode.

The fixed delay circuit 9 has a plurality of delay circuits (not shown) corresponding to the output signal lines of the receive circuit 7. Each of these delay circuits is composed of a plurality of constant-K filter units which are connected to each other in series, each unit consisting of an inductor having a fixed inductance L and a capacitor having a fixed capacitance C. The number of the filter units which are connected to each other in series is selected in accordance with the length of the delay time which is to be supplied to the output signal of the receive circuit 7. Since the constant-K filter which is composed of an inductor having a fixed inductance L and a capacitor having a fixed capacitance C can be constituted by an inductance L and a capacitance C of a small value, it is easy to realize an adequately high cut-off frequency $f_c$. Although in a constant-K filter which is composed of an inductance L and a capacitance C of a small value the delay time per unit is short, the desired delay time is obtained by increasing the number of the filter units which are connected in series. The attenuation of a signal caused by the increase in number of the filter units is compensated by compensating circuits which are inserted between the filter units as required. Such an operation with respect to a signal can be freely conducted in the fixed delay circuit unlike in a variable delay circuit. Accordingly, the reduction of the cut-off frequency $f_c$ and the attenuation of the echo signal can be ignored.

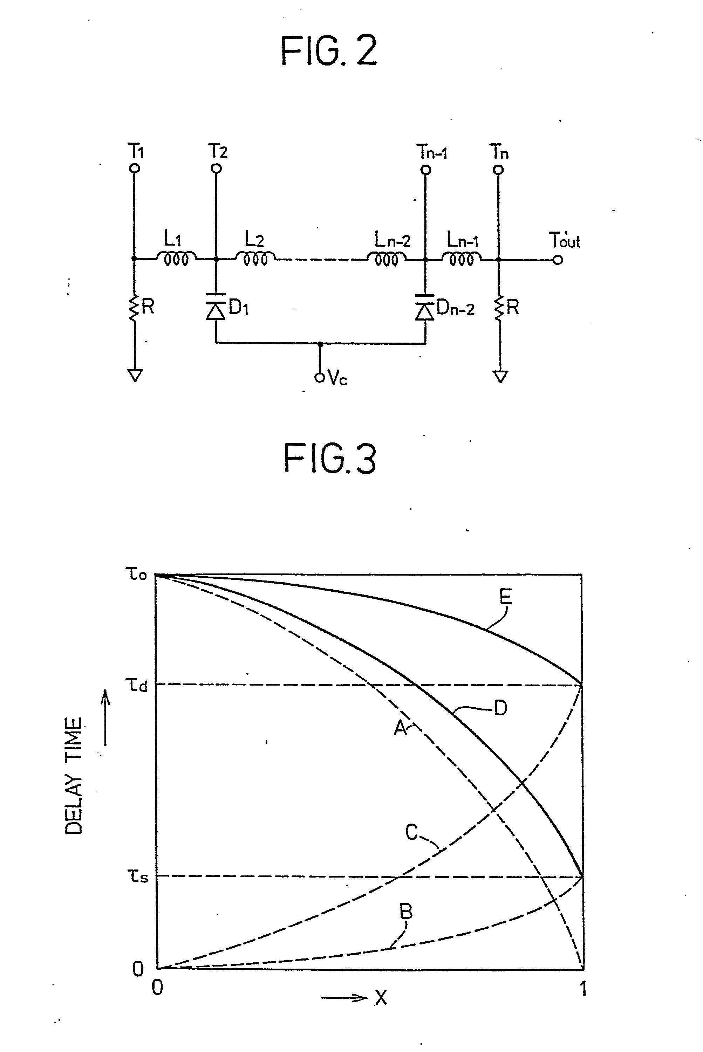

The delay time which the fixed delay circuit 9 supplies to an output signal of the receive circuit 7 is determined so as to have the maximum value with respect to the reception signal at the center of the aperture, and to decrease substantially in proportion to the square of the distance from the center of the aperture. Such a delay characteristic is indicated by the curve A in Fig. 3. In Fig. 3, the abscissa X represents the distance from the center of the aperture as a ratio with respect to the size of the aperture. The symbol $\tau_0$ represents the delay time for the reception signal at the center of the aperture.

The variable delay circuit 10 is composed of a plurality of constant-K filter units which are connected to each other in series and each of which consists of an inductor $L_i$ (i = 1, 2,..., n - 1) having a fixed inductance and a variable capacity diode $D_i$, and matching resistances R which are connected to both ends of the series circuit, as shown in Fig. 2. A capacity control voltage $V_c$ is supplied in common from a delay control circuit 11 to the variable capacity diode $D_i$ of each filter unit, and taps $T_1$, $T_2$, ..., $T_n$ are led from the input/output terminals of the respective filter units. These taps serve as the input terminals of the signals output from the fixed delay circuit 9, and one end of the series circuit serves as the output terminal $T_{out}$ of the signals. The signal at the center of the aperture and is output from the fixed delay circuit 9 is supplied to the terminal $T_n$, which is the nearest to the output terminal $T_{out}$, and the other signals of the aperture are supplied to the respective taps which are distant from the output terminal $T_{out}$ by the distance substantially proportional to the square of the distance between the center of the aperture and the respective signals. The signals at both ends of the aperture are supplied to the tap $T_1$, which is the farthest from the output terminal $T_{out}$. As a result, the signal at the center of the aperture is output from the

output terminal $T_{out}$ at the least delay time and the other signals are output from the output terminal $T_{out}$ while being delayed by the time substantially proportional to the square of the distance from the center of the aperture. When the capacitance of the variable capacity diode $D_i$ is continuously varied by the control voltage $V_c$, the delay time with respect to each signal is continuously varied while maintaining the characteristic of the relationship between the delay time and the position in the aperture being the square.

The delay characteristic of the variable delay circuit 10 is represented by the curves B and C in Fig. 3. The curve B represents the case in which the capacitance of the variable capacity diode $D_i$ is at its minimum and the delay time from the end to end of the variable delay circuit 10 is $\tau_s$, while the curve C represents the case in which the capacitance of the variable capacity diode $D_i$ is at its maximum and the delay time from the end to end of the variable delay circuit 10 is $\tau_d$. The delay characteristic of the variable delay circuit 10 is continuously varied between the curves B and C. Neither $\tau_s$ or $\tau_d$ exceeds the value of $\tau_0$.

The variable delay circuit 10 is not limited to a delay circuit provided with taps such as that shown in Fig. 2, and a variable delay circuit which is provided for each reception signal may be used. In this case, each delay circuit is so constituted that the distribution of delay time forms such a square curve as indicated by the curves B and C in Fig. 3.

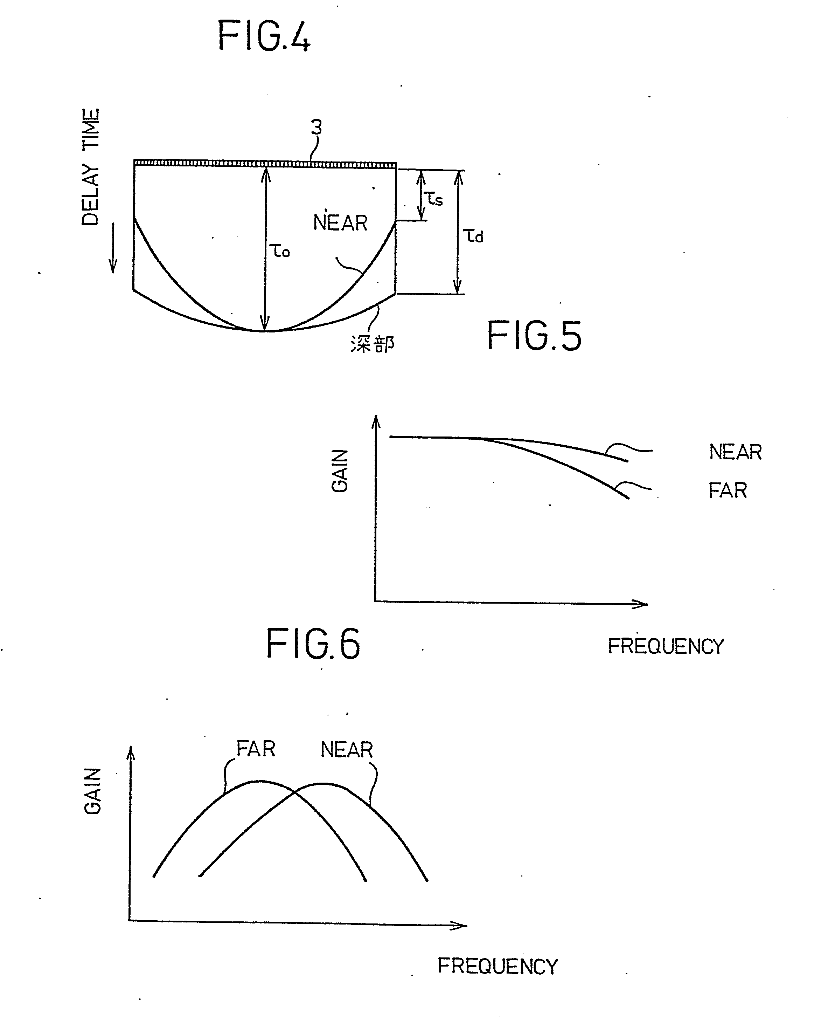

When a plurality of output signals of the receive circuit 7 pass the fixed delay circuit 8 and the variable delay circuit 10, these signals are delayed by the time equivalent to the sum of the delay times which are supplied from both delay circuits. Consequently, the synthetic delay characteristic of the delay circuit 8 is represented by the curves D and E. The curves D and E as well as the curve A show that the delay time decreases substantially in proportion to the square of X, which is the value of the distance from $\tau_0$. The synthetic delay characteristic is continuously varied between the curves D and E by continuously varying the capacitance of the variable capacity diode $D_i$ of the variable delay circuit 10. The curves A, D, and E have smaller coefficients of the quadratic terms in that order. That is, the curve D shows the delay characteristic in the case of the shortest focal distance, and the curve E the delay characteristic in the case of the longest focal distance. Fig. 4 shows such delay characteristic with respect to the entire aperture.

When the focal distance is the shortest, the capacitance of the variable capacity diode $D_i$ is at its minimum and the delay time $\tau$ is also at its minimum in the variable delay circuit 10, so that the cut-off frequency $f_c$ reaches its highest value. Therefore, it allows the high-pass frequency components which are included in the reception signal of an echo from a short distance to sufficiently pass. The nearer to the center of the aperture a reception signal is, the shorter portion of the variable delay circuit 10 it passes, so that the signal at the central portion of the aperture has the greatest importance.

When the focal distance is the longest on the other hand, the capacitance of the variable capacity diode $D_i$ is at its maximum and the delay time $\tau$ is also at its maximum in the variable delay circuit 10, so that the cut-off frequency $f_c$ reaches its lowest value. Therefore, high-pass frequency components which are included in the reception signal of an echo from a long distance are cut off or greatly attenuated, but there is no problem because the central frequency of the echo from the long distance has been moved toward the low-pass side. It is rather advantageous that the high-pass frequency components which are included in the reception signal of the echo from the long distance are cut off or attenuated, because most of them are noise. A long focal distance does not alter the fact that the nearer to the center of the aperture a reception signal is, the shorter portion of the variable delay circuit 10 it passes, so that the signal at the central portion of the aperture has the greatest importance.

Fig. 5 shows the above-described change in the frequency characteristic of the delay circuit 8 in the case of varying the focal distance from a short distance to a long distance. This frequency characteristic well agree with that of the known dynamic filter 5 shown in Fig. 6.

While there has been described what is at present considered to be the best mode for carrying out the invention, it will be understood that various modifications may be made thereto, and it is intended that the appended claims cover all such modifications as fall within the true spirit and scope of the invention.

CLAIM

What is claimed is:

1. An ultrasonic diagnostic apparatus comprising:

a plurality of ultrasonic vibrator elements (3) which are arranged on a one-dimensional line or in a two-dimensional plane to constitute an ultrasonic vibrator array;

a receive circuit (7) for receiving and amplifying echo signals which are detected by the respective ultrasonic vibrator elements which constitute an aperture for receiving one ultrasonic beam; and

a delay circuit (8) for summing up the respective amplified output signals of said receive circuit by delaying said output signals by the respective delay times which are determined in correspondence with the respective focal lengths;

said delay circuit (8) including a series circuit composed of a fixed delay circuit (9) which distributes the delay time so that said delay time is at its maximum at the central portion of said aperture and decreases from said central portion toward both end portions substantially in proportion to the square of the distance from the center of said aperture, and a variable delay circuit which (10) distributes the delay time so that said delay time is at its minimum at the central portion of said aperture and increases from said central portion toward both end portions substantially in proportion to the square of the distance from the center of said aperture.

# FIG.1

— 3

—7 RECEIVE CIRCUIT

—9 FIXED DELAY CIRCUIT

—8

10 VARIABLE DELAY CIRCUIT

11
DELAY CONTROL
CIRCUIT

—5 DYNAMIC FILTER

—6 DISPLAY

# FIG. 2

# FIG. 3

# FIG.4

DELAY TIME

3

$\tau_s$

NEAR

$\tau_0$

$\tau_d$

深部

# FIG.5

GAIN

NEAR

FAR

FREQUENCY

# FIG.6

GAIN

FAR    NEAR

FREQUENCY

# INTERNATIONAL SEARCH REPORT

0229840

International Application No. PCT/JP86/00248

**I. CLASSIFICATION OF SUBJECT MATTER** (if several classification symbols apply, indicate all) [3]

According to International Patent Classification (IPC) or to both National Classification and IPC

Int.Cl[4]   G01N29/04

**II. FIELDS SEARCHED**

| Minimum Documentation Searched [4] | |
|---|---|
| Classification System | Classification Symbols |
| IPC | G01N29/04 |

Documentation Searched other than Minimum Documentation
to the Extent that such Documents are Included in the Fields Searched [5]

| | |
|---|---|
| Jitsuyo Shinan Koho | 1970 – 1985 |
| Kokai Jitsuyo Shinan Koho | 1971 – May 1986 |

**III. DOCUMENTS CONSIDERED TO BE RELEVANT** [14]

| Category* | Citation of Document, [16] with indication, where appropriate, of the relevant passages [17] | Relevant to Claim No. [18] |
|---|---|---|
| A | JP, A, 55-151280 (Yokokawa Hokushin Denki Seisakusho Kabushiki Kaisha) 25 November 1980 (25. 11. 80) P.2, upper part, right column, line 14 to p.2, lower part, right column, line 1 (Family: none) | 1 |
| A | JP, A, 54-38694 (Hitachi Medico Kabushiki Kaisha) 23 March 1979 (23. 03. 79) P.2, upper part, right column, line 19 to p.2, lower part, right column, line 4 (Family: none) | 1 |

* Special categories of cited documents: [15]
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step
"Y" document of particular relevance; the claimed invention cannot be considered to involve an inventive step when the document is combined with one or more other such documents, such combination being obvious to a person skilled in the art
"&" document member of the same patent family

**IV. CERTIFICATION**

| Date of the Actual Completion of the International Search [2] | Date of Mailing of this International Search Report [2] |
|---|---|
| August 7, 1986 (07. 08. 86) | August 18, 1986 (18. 08. 86) |
| International Searching Authority [1] | Signature of Authorized Officer [20] |
| Japanese Patent Office | |

Form PCT/ISA/210 (second sheet) (October 1981)